# FASCICULE DE BREVET EUROPEEN

(11) **EP 0 936 430 B1**
(45) Date de publication et mention de la délivrance du brevet: **01.10.2003**
(21) Numéro de dépôt: 99420038.4
(22) Date de dépôt: 12.02.1999
(51) Int. Cl.: F26B 25/22, G01N 27/04

(54) **Procédé et dispositif de contrôle de la teneur en eau de produits stockés dans une enceinte**
Verfahren und Vorrichtung für die Kontrolle des Wassergehalts von in einem geschlossenen Raum gelagerten Produkten
Method and device for controlling the water content of products stored in an enclosure

(30) Priorité: 16.02.1998 FR 9802037
(43) Date de publication de la demande: 18.08.1999
(73) Titulaire: Verheecke, Eric Julien, 51100 Reims (FR)
(72) Inventeur: Verheecke, Eric Julien, 51100 Reims (FR)
(74) Mandataire: Myon, Gérard Jean-Pierre

(56) Documents cités:
- EP-A- 0 095 265
- EP-A- 0 558 862
- DE-A- 3 502 423
- FR-A- 2 605 851
- US-A- 4 386 471
- US-A- 4 583 300
- US-A- 4 599 809

## Description

La présente invention a trait à un procédé de contrôle de la teneur en eau de produits stockés dans une enceinte.

L'invention concerne tout produit dont la teneur en eau est susceptible d'influer sur le stockage, et vise notamment les matériaux organiques et les produits agro-alimentaires, tels que des céréales. On entend par enceinte tout local de grandes dimensions propre au stockage, notamment un silo.

Le principe fondamental du stockage consiste à maintenir et/ou à modifier les paramètres qui conditionnent une bonne qualité ou une qualité attendue de conservation des produits. On sait que, pour chaque produit, il existe des plages ou des limites appropriées de teneur en eau et/ou en température dans lesquelles il est possible de maintenir ou d'obtenir des caractéristiques du produit stocké. La teneur en eau d'un produit est définie comme étant le rapport de la quantité d'eau contenue dans ce produit sur le poids total de ce dernier. Dans certains cas, la teneur en eau peut être exprimée sous forme de titre molaire.

Afin de s'assurer que les teneurs en eau et les températures sont bien incluses dans la plage de conservation des produits, il est nécessaire d'en connaître périodiquement les valeurs. Il est connu d'immerger à cet effet des capteurs de mesure de la température. Si l'enceinte est ventilée, il est aussi possible de mesurer la température de l'air d'entrée et/ou de sortie.

Ces moyens ne permettent pas de connaître avec précision la valeur de la teneur en eau des produits pour contrôler l'ambiance de l'enceinte.

Puis on met en oeuvre un dispositif susceptible de modifier la température et/ou la teneur en eau dans le conteneur. Pour illustrer cela, le dispositif pour modifier l'ambiance peut être un ventilateur qui insuffle de l'air dans cette enceinte ou aspire à partir de cette dernière. Il est fait usage de cet appareil de manière circonstanciée, essentiellement en fonction de la température.

Un tel procédé de contrôle ne permet pas d'obtenir réellement les résultats escomptés, de sorte que peuvent intervenir des modifications des caractéristiques des produits stockés, telles que l'apparition de bactéries, d'insectes ou de moisissures ou bien une diminution excessive de la teneur en eau des produits.

EP-A-0 095 265 décrit un procédé de commande d'une opération de séchage de produits, tels que des grains. A cet effet, la température et l'humidité de l'air introduit dans l'enceinte sont déterminées, en différents points.

EP-A-0 558 862 décrit un procédé et un dispositif de mesure de l'humidité relative d'équilibre d'un produit. A cet effet, on fait appel à un élément sensible d'un capteur, que l'on soumet à un champ électromagnétique, le signal correspondant étant traité en vue de la détermination de cette humidité relative d'équilibre.

Afin de pallier les inconvénients de l'art antérieur évoqués ci-dessus, l'invention se propose de mettre en oeuvre un procédé permettant de contrôler, de manière simple et fiable, la teneur en eau de produits stockés dans une enceinte.

A cet effet, l'invention a pour objet un tel procédé, caractérisé en ce qu'il comprend les étapes suivantes :
- on mesure, en au moins un point quelconque, à l'intérieur de la masse de produits, une valeur représentative de la pression partielle de vapeur d'eau en ledit point, à l'état d'équilibre global de pression partielle de vapeur d'eau dans l'enceinte, desdits produits,
- on compare ladite valeur mesurée à une plage de valeurs de consigne représentatives de la plage de pression partielle de vapeur d'eau, et
- on modifie de manière appropriée l'ambiance régnant dans l'enceinte, si ladite valeur mesurée est située en dehors de ladite plage.

Le procédé conforme à l'invention permet de maintenir la teneur en eau des produits dans la plage de bonne conservation des produits.

Par voie de conséquence, ce procédé permet aussi de mieux contrôler les conditions de transport et/ou de transfert ultérieurs de certains produits.

Cela peut notamment s'appliquer lorsque l'on veut éviter ou diminuer le risque d'explosion.

A titre d'illustration, cela est utile lorsque l'on stocke des produits constitués en tout ou partie de poudres et/ou de poussières qui deviennent dangereuses dans certaines conditions de teneur en eau.

Un premier exemple de cette illustration est le stockage de poudres explosives. Il est en effet connu qu'une poudre mouillée n'explose pas. Par voie de conséquence, dans des conditions données de température, de pression, de densité et d'éventuels autres paramètres, la capacité explosive de cette poudre diminue avec l'augmentation de la teneur en eau.

Un deuxième exemple est le stockage de l'orge. Cette céréale est à l'origine de catastrophes dans des silos de stockage ou dans les usines de transformation, notamment dans les malteries.

En développant une analogie avec le premier exemple, la similitude permet d'obtenir la même conclusion qui, dans ce cas, peut être reformulée en disant que le risque d'explosion des poussières d'orge augmente lorsque l'activité en eau, ou Aw, de l'orge diminue.

Une autre conséquence significative du procédé de l'invention est que ce dernier permet de connaître et/ou de maîtriser les paramètres que sont la teneur en eau et l'activité en eau des produits lors de leur conditionnement ou utilisation ultérieure.

A titre d'illustration, le conditionnement en petits lots de produits gérés par le procédé de l'invention permet de mieux s'assurer de la validité des dates limites de consommation. Une autre illustration possible consiste à mesurer, suivant le procédé de l'invention, l' Aw d'une émulsion eau/huile afin de mieux connaître l'Aw des produits finis, tels par exemple une mayonnaise allégée:

Le procédé de l'invention permet de connaître l'évolution de la teneur en eau pendant toute la durée du stockage, et donc d'éviter que les produits soient momentanément mis dans des conditions anormales d'Aw.

A titre d'exemple, cet aspect est important pour le stockage de semences pour lesquelles un excès momentané d'Aw va provoquer un début de germination et une insuffisance momentanée d'Aw risque de diminuer leur pouvoir germinatif.

Le procédé conforme à l'invention permet donc d'améliorer la traçabilité des produits et de mieux en garantir la qualité finale.

La température régnant dans l'enceinte est gérée comme dans l'art antérieur. Elle peut ne pas être constante et ne pas tendre à le devenir. Au sein de l'enceinte, la transmission de chaleur par rayonnement est infime, dans la mesure où la température qui y règne est trop basse pour ce mode de propagation. De plus, à l'état d'équilibre, la convection thermique au sein de l'enceinte est très faible. Enfin, la transmission de chaleur par conduction n'est pas très importante, étant donné que les produits sont, de manière générale, isolants et que, dans le cas de produits solides, les surfaces en contact entre ces derniers peuvent être relativement faibles.

En revanche, il a été constaté par la Demanderesse que, à l'état d'équilibre, la pression de vapeur d'eau régnant au sein de la masse de produits était non seulement la même à un instant donné, en tout point de cette masse, mais qu'elle était en outre égale, à la conversion et aux unités près, à l'humidité relative d'équilibre et à l'activité en eau des produits stockés.

La masse de produits peut soit être essentiellement constituée par les produits eux-mêmes, notamment dans le cas où ces derniers sont liquides, soit comprendre les produits et l'air interstitiel, dans le cas où ces derniers sont solides.

On entend, par état d'équilibre des produits, un état dans lequel, en un point donné de la masse de produits, la pression partielle de vapeur d'eau est stabilisée, tout comme l'Activité en eau, A_{w}, de ces produits.

Si l'on considère d'une part les produits stockés à l'intérieur de l'enceinte et, d'autre part, l'air présent dans cette dernière, les règles de la thermodynamique démontrent que les produits et l'air, s'il y en a, vont être amenés à échanger mutuellement de l'eau jusqu'à atteindre un équilibre. Une fois ce dernier obtenu, la pression partielle de vapeur d'eau sera donc sensiblement identique en tout point intérieur à l'enceinte, ainsi qu'au niveau de chaque grain.

Or, la pression de vapeur d'eau varie continûment et de manière croissante avec la teneur en eau. Donc, si la valeur de la pression de vapeur d'eau ou d'un paramètre directement lié à cette dernière, est située hors de la plage garantissant la bonne conservation des produits, il conviendra d'agir de manière circonstanciée de façon à assécher ou à humidifier globalement l'atmosphère intérieure de l'enceinte.

Les grandeurs physiques représentatives de la pression partielle de vapeur d'eau sont, outre cette dernière, l'humidité relative de l'air en équilibre avec le produit, appelée Humidité Relative d'Equilibre ou H.R.E, ainsi que l'activité de l'eau Aw. Ces deux dernières grandeurs sont liées à la pression de vapeur d'eau par une relation aisément déterminable, pour des conditions de température données.

Selon une première caractéristique avantageuse de l'invention, l'étape de modification de l'ambiance'régnant dans l'enceinte comprend une étape d'extraction d'au moins une partie des produits hors de l'enceinte, une étape de traitement des produits extraits, qui se déroule à l'extérieur de l'enceinte et une étape de réintroduction des produits traités à l'intérieur de l'enceinte. Ce mode d'exécution trouve par exemple son application au traitement des insectes susceptibles d'apparaître dans l'enceinte, la destruction de ces insectes faisant appel à un traitement chimique externe à l'enceinte. Il en va de même lorsque l'humidité des produits est beaucoup trop élevée, auquel cas le produit extrait au moins partiellement est séché dans un séchoir, puis se trouve réintroduit dans l'enceinte.

Selon une seconde caractéristique avantageuse de l'invention, l'étape de modification de l'ambiance régnant dans l'enceinte est réalisée en maintenant les produits à l'intérieur de l'enceinte, notamment par ventilation de l'enceinte.

Selon une autre caractéristique avantageuse de l'invention, on mesure simultanément deux valeurs représentatives de la pression partielle de vapeur d'eau en deux points de la masse de produits, éloignés l'un de l'autre, et on compare les valeurs ainsi obtenues. Dans le cas où les valeurs sont sensiblement différentes l'une de l'autre, ceci démontre l'existence d'une source de vapeur d'eau à l'intérieur de l'enceinte, qui est à l'origine d'un déséquilibre thermodynamique et donc d'un gradient permanent de pression de vapeur d'eau. A titre d'illustration, cette source de vapeur d'eau peut être due à la présence d'insectes, ou à un début de fermentation d'une partie des produits stockés, fermentation qui peut être induite par la présence d'un point chaud ou d'une prise en masse des produits. La détection rapide d'un tel phénomène qui peut nuire gravement à la bonne conservation des produits, est donc particulièrement avantageuse dans la mesure où les responsables du stockage peuvent intervenir de manière quasi-instantanée, et avant que des dégradations importantes ne se soient produites.

Selon une autre caractéristique avantageuse de l'invention, on mesure, en un même point à l'intérieur de la masse de produits, plusieurs valeurs représentatives de la pression partielle de vapeur d'eau en ce point, de manière échelonnée dans le temps. Ceci permet de constater si les modifications apportées à l'atmosphère intérieure de l'enceinte ont fait varier, dans la mesure souhaitée, la valeur représentative de la pression partielle de la vapeur d'eau.

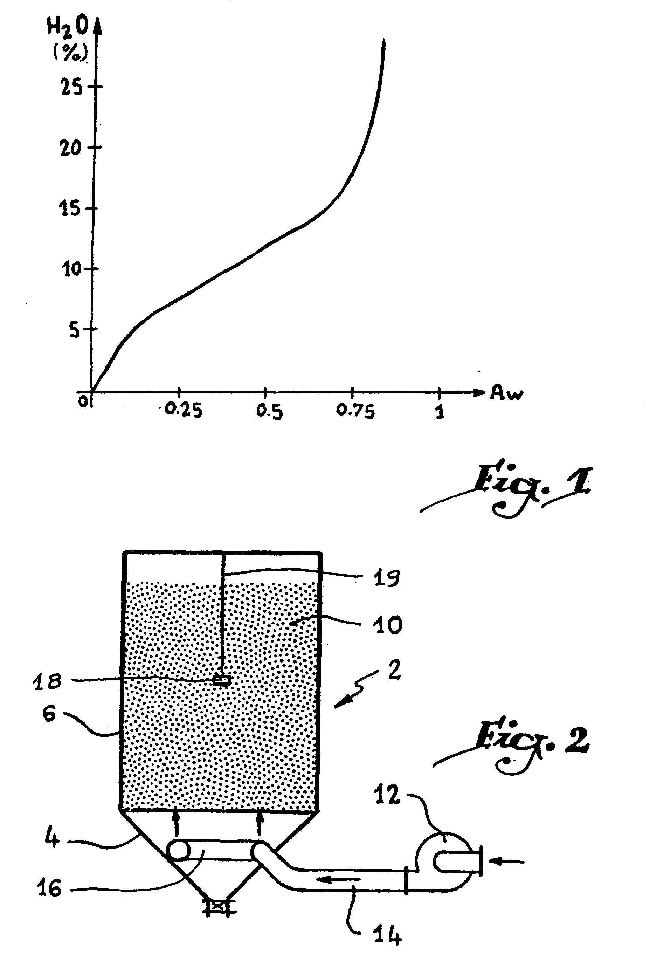

Selon une autre caractéristique avantageuse de l'invention, la valeur représentative de la pression partielle de vapeur d'eau est l'activité de l'eau. La figure 1 annexée illustre une courbe de sorption correspondant à la variation de l'activité de l'eau en fonction de la teneur en eau dans des; produits à une température donnée. Dans le cas de la majorité des produits et y compris dans les céréales, la pente de cette courbe, au voisinage des valeurs d'activité de l'eau comprise entre 0.4 et 0.65, est de 12 à 20%. La mesure de l'activité de l'eau permet donc d'opérer un effet de loupe sur la teneur en eau des produits. De ce fait, la mesure de l'activités de l'eau permet d'accéder avec une grande précision à la teneur en eau globale des produits, en assurant une détection fiable de toute, variation de l'état d'équilibre du système thermodynamique.

A partir de cette courbe de sorption, de la température et de la plage de teneurs en eau garantissant la bonne conservation des produits, il est possible de déterminer avec précision la plage d'activités de l'eau permettant la bonne conservation de ces produits.

L'invention a également pour objet un dispositif de contrôle de la teneur en eau de produits stockés dans une enceinte, pour la mise en oeuvre du procédé tel que défini ci-dessus, comportant des moyens de modification de l'ambiance régnant dans l'enceinte, notamment un ventilateur, comprenant en outre des moyens de mesure d'une valeur représentative de la pression partielle de vapeur d'eau, à l'état d'équilibre desdits produits, en au moins un point quelconque à l'intérieur de la masse de produits.

L'invention va être décrite ci-dessous, en référence aux dessins annexés donnés uniquement à titre d'exemple, et dans lesquels, outre la figure 1 précédemment évoquée :
- la figure 2 est une vue schématique d'une enceinte dans laquelle peut être mis en oeuvre le procédé conforme à l'invention ;
- les figures 3A et 3B sont des vues respectivement de dessus et de côté d'un capteur permettant la mise en oeuvre du procédé conforme à l'invention, ainsi que d'un dispositif assurant son excitation électrique ;
- la figure 4 est un schéma de principe illustrant le résultat d'une mesure effectuée par le capteur des figures 3A et 3B, et
- la figure 5 est un schéma de principe illustrant la visualisation, au niveau d'un ordinateur, d'une mesure obtenue par le capteur des figures 3A et 3B.

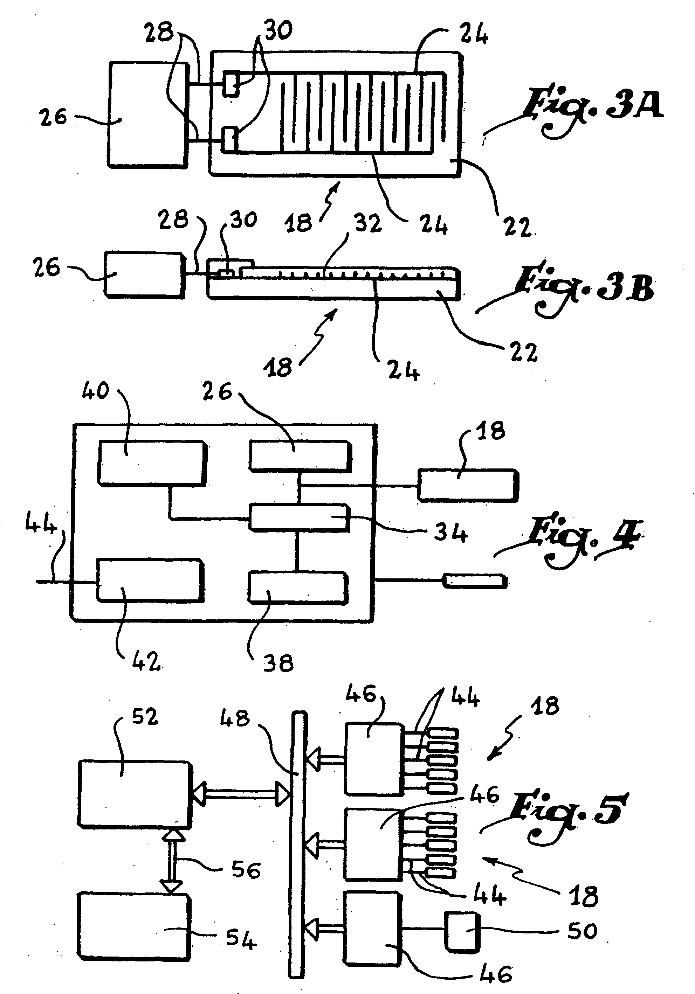

L'enceinte représentée à la figure 2, et désignée dans son ensemble par la référence 2, qui est par exemple un silo, comprend une embase 4 conique s'évasant vers le haut et prolongée par un fût cylindrique 6 fermé en son sommet. Un ventilateur 12 est prévu à l'extérieur de l'enceinte 2, au voisinage de ce dernier. Ce ventilateur alimente en air une conduite intermédiaire 14 pénétrant au travers de l'embase 4, ainsi qu'un tube de soufflage 16 torique intérieur à cette embase. Ce tube torique 16 est propre à diriger de l'air en direction des produits 10.

Un capteur 18 est disposé à l'intérieur du fût 6 de l'enceinte 2. Ce capteur est fixé sur une plaque métallique non représentée, solidaire d'un câble 19 pénétrant au travers du dessus de la paroi du fût 6. Le capteur 18 plonge donc dans la masse formée par les produits 10. L'alimentation électrique et la transmission des données recueillies par le capteur sont assurées par des fils électriques non représentés, fixés au câble par l'intermédiaire d'une gaine plastique, métallique ou thermorétractable et thermocollante, permettant de limiter les contraintes exercées sur ces fils. Les différents éléments assurant le traitement des données fournies par le capteur 18 ne sont pas représentés sur cette figure 1, mais seront explicités dans ce qui suit.

Les figures 3A et 3B représentent de manière plus détaillée le capteur 18. Ce dernier comprend un support 22 isolant sur lequel sont placées deux électrodes 24 susceptibles d'être excitées au moyen d'un dispositif 26, qui est par exemple un générateur de signaux périodiques rectangulaires. Ce dispositif est relié aux électrodes 24 par des câbles de liaison 28 et des surfaces de soudure correspondantes 30. Une pellicule mince 32 recouvre les électrodes 24, au niveau de la majeure partie de la surface du support 22. Cette pellicule est, par exemple, réalisée en cellulose ou avec un polymère conducteur complexe à base de polyamides, de silicone ou de polyéthylènes chargés ou non.

Cette pellicule 32, qui se place en équilibre avec le milieu dans lequel elle est plongée, possède une impédance variant avec la quantité de molécules d'eau adsorbées à sa surface. En vue de la mesure de cette variation d'impédance, la pellicule 32 est soumise à un champ électrique alternatif au moyen des électrodes 24, champ dont la tension peut être de 1 volt et la fréquence de 500 hertz. Dans l'exemple décrit, le polymère choisi est tel qu'il est possible de mesurer la variation de sa composante résistive, étant entendu que l'on peut également s'attacher à la variation de la composante capacitive en utilisant un autre polymère.

L'impédance est mesurée au niveau d'un dispositif de mesure 34, qui prend également en compte les variations de la température signalées par un capteur 36 en relation avec un élément de correction 38 correspondant. L'impédance ainsi mesurée en 34 est alors délivrée à une cellule 40 de réglage des paramètres et d'étalonnage en relation avec une unité de délivrance de résultat 42. L'étalonnage est réalisé en disposant la pellicule 32 dans une atmosphère connue dont les paramètres sont imposés. A cette fin, une des solutions est d'utiliser des sels d'étalonnage. Dans l'exemple représenté, il a été choisi de délivrer un courant de 4 milliampères pour zéro et de 20 milliampères pour 1 en échelle d'activité de l'eau. Bien évidemment, ce choix n'est pas restrictif.

La cellule 42 délivre le résultat de la mesure par la. ligne 44. Ce capteur est remarquable en ce qu'il peut fonctionner même en absence d'air, de sorte qu'il peut également être opérationnel dans un liquide. Ceci le différencie notablement des capteurs habituels de mesure de l'humidité de l'air. De plus, contrairement à d'autres courbes, les plages de variation de l'activité de l'eau des produits sont connues. Il est ainsi possible de tenir compte de ce paramètre lors des procédures d'étalonnage.

A titre d'illustration, pour les céréales, la plage intéressante des mesures est comprise entre 0.4 et 0.8 en ce qui concerne l'activité de l'eau. Il est donc recherché une précision maximale sur cette plage, à savoir par exemple un objectif de 1% sur la plage comprise entre 0.55 et 0.65 et de 2% pour les plages comprises respectivement entre 0.4 et 0.55, ainsi qu'entre 0.65 et 0.80. En vue de l'obtention des précisions recherchées, chaque capteur est ajusté à une valeur voisine de 0.55 grâce à l'emploi de solution saline de référence. La valeur exacte dépend de la nature de la solution saline de référence ainsi que de sa température.

La figure 5 représente des moyens permettant d'afficher les valeurs mesurées au moyen d'un ensemble de capteurs 18. Chacun de ces derniers délivre, au niveau de la ligne 44, le résultat de leur mesure. Ces lignes sont raccordées à des cartes de multiplexage 46. Un bus de commande et de lecture 48 reçoit les informations émises par ces cartes de multiplexage 46, en parallèle avec les informations provenant d'un générateur de signal de référence 50. Ce bus délivre des informations en direction d'une carte de digitalisation 52 analogique/digital, laquelle transmet les informations ainsi traitées vers un ordinateur de commande et de lecture 54, via une ligne de communication en numérique 56.

Il est à noter que l'ordinateur 54 peut être en relation avec des moyens non représentés aptes à actionner le ventilateur 12 de manière appropriée, suivant que la valeur d'activité de l'eau mesurée par les capteurs 18 est située au-dessous ou au-dessus de la plage désirée de bonne conservation des produits. Il peut s'agir de moyens propres à comparer la valeur obtenue par les capteurs 18 avec des consignes définissant une plage de bonne conservation des produits, associés avec des moyens de mesure de la pression partielle de vapeur d'eau de l'air extérieur. Ces moyens de comparaison peuvent être combinés avec des moyens propres à asservir le ventilateur 12, de sorte que ce dernier insuffle de l'air dans l'enceinte 2 ou aspire de l'air depuis ce dernier, selon que la valeur mesurée est au-dessous ou au-dessus de la plage désirée.

Si la valeur obtenue par les capteurs 18 est supérieure à la limite maximale, le ventilateur 12 sera actionné lorsque la pression partielle de vapeur d'eau de l'air extérieur sera inférieure à la valeur obtenue. Dans le cas contraire, si la valeur lue par les capteurs 18 est inférieure à la limite minimale, le ventilateur 12 sera activé lorsque la pression partielle de vapeur d'eau de l'air extérieur est supérieure à la valeur obtenue.

Cette commande peut être réalisée par le personnel en charge de l'enceinte. On peut aussi gérer ces informations par ordinateur. Dans ce cas, lorsque l'ordinateur reçoit des résultats de mesurage qui autorisent et/ou demandent la commande du ventilateur, il actionne un relais de sortie via une carte interface numérique de sortie. Ce relais, fermé lorsqu'il commande, alimente la bobine électrique du contacteur de puissance du ventilateur.

On va maintenant décrire ci-dessous un exemple de mise en oeuvre du procédé conforme à l'invention.

Des denrées agro-alimentaires périssables, en l'occurrence de l'orge, sont stockées au sein de l'enceinte représentée à la figure 2. La contenance du fût 6 est, par exemple, de 1 000 m³, et les denrées une fois stockées occupent un volume de 950 m³, pour une masse de 650 tonnes. La plage d'activité de l'eau, pour laquelle la conservation de ces denrées est garantie, tout en ne déshydratant pas trop ces dernières, est comprise entre 0,60 et 0,65. On mesure, au moyen du capteur 18, l'activité de l'eau relative à l'atmosphère intérieure du fût 6. A cet effet, le capteur 18 est plongé dans le lit formé par les denrées, environ 10 mètres au-dessus du fond. Ce capteur délivre une mesure de 0,70 pour l'activité en eau régnant au sein du conteneur, valeur qui correspond également à l'activité en eau des denrées stockées. Etant donné que cette valeur n'est pas incluse dans la plage permettant une bonne conservation des denrées, il est nécessaire de procéder à une ventilation de l'atmosphère intérieure du fût 6, au moyen du ventilateur 12.

L'humidité relative de l'air extérieur est de 0,50. Cet air extérieur possède donc une pression de vapeur d'eau globalement inférieure à celle de l'intérieur de l'enceinte 2. En complément, si la température externe est voisine de la température des produits, aspirer de l'air permettra donc d'assécher l'atmosphère intérieure de l'enceinte 2, et donc de réduire l'activité en eau qui y est présente, de manière à la rendre conforme à une bonne conservation des denrées. A cet effet, on dirige par le tube 16, un débit d'air extérieur de 500 m³/heure, pendant 30 minutes, vers l'enceinte 2.

Puis, on laisse l'état thermodynamique de l'atmosphère intérieure du conteneur se stabiliser. On effectue alors, de manière analogue à ce qui a été décrit précédemment, une mesure supplémentaire de l'activité en eau régnant au sein de l'enceinte 2. Cette valeur, qui est de 0,64, est à même de garantir la bonne conservation des produits.

## Revendications

1. Procédé de contrôle de la teneur en eau de produits (10) stockés dans une enceinte (2), **caractérisé en ce qu'**il comprend les étapes suivantes :
- on mesure, en au moins un point quelconque à l'intérieur de la masse de produits, une valeur représentative de la pression partielle de vapeur d'eau en ledit point, à l'état d'équilibre global de pression partielle de vapeur d'eau dans l'enceinte, desdits produits,
- on compare ladite valeur mesurée à une plage de valeurs de consigne représentatives de la pression partielle de vapeur d'eau, et
- on modifie de manière appropriée l'ambiance régnant dans l'enceinte, si ladite valeur mesurée est située en dehors de ladite plage.

2. Procédé selon la revendication 1, **caractérisé en ce que** l'étape de modification de l'ambiance régnant dans l'enceinte (2) comprend une étape d'extraction d'au moins une partie des produits (10) hors de l'enceinte, une étape de traitement des produits extraits, qui se déroule à l'extérieur de l'enceinte et une étape de réintroduction des produits traités à l'intérieur de l'enceinte (2).

3. Procédé selon la revendication 1, **caractérisé en ce que** l'étape de modification de l'ambiance régnant dans l'enceinte (2) est réalisée en maintenant les produits (10) à l'intérieur de l'enceinte, notamment par ventilation de l'enceinte.

4. Procédé selon l'une des revendications 1 à 3, **caractérisé en ce qu'**on mesure simultanément au moins deux valeurs représentatives de la pression partielle de vapeur d'eau en deux points de la masse de produits, éloignés l'un de l'autre, et on compare lesdites deux valeurs mesurées.

5. Procédé selon l'une des revendications 1 à 4, **caractérisé en ce qu'**on mesure, en un même point à l'intérieur de la masse de produits, plusieurs valeurs représentatives de la pression partielle de vapeur d'eau en ledit point, de manière échelonnée dans le temps.

6. Procédé selon l'une quelconque des revendications précédentes, **caractérisé en ce que** la valeur représentative de la pression partielle de vapeur d'eau est l'activité de l'eau.

7. Dispositif de contrôle de la teneur en eau de produits stockés dans une enceinte (2), pour la mise en oeuvre du procédé selon l'une quelconque des revendications précédentes, comportant des moyens de modification de l'ambiance régnant dans l'enceinte, notamment un ventilateur (12), comprenant en outre des moyens de mesure (18) d'une valeur représentative de la pression partielle de vapeur d'eau, à l'état d'équilibre desdits produits, en au moins un point quelconque à l'intérieur de la masse de produits (10).

8. Dispositif suivant la revendication 7, **caractérisé en ce que** les moyens de mesure comprennent au moins un capteur (18) de l'activité de l'eau à l'intérieur de la masse de produits (10).

9. Dispositif suivant la revendication 8, **caractérisé en ce que** ledit capteur (18) de l'activité de l'eau possède une pellicule d'adsorption (32) susceptible d'être activée par des moyens d'excitation électrique (24), l'impédance de ladite pellicule variant avec la quantité de molécules d'eau adsorbées à sa surface et/ou au sein de ladite pellicule.

10. Dispositif suivant l'une des revendications 8 ou 9, **caractérisé en ce qu'**il comprend des moyens de comparaison d'une valeur obtenue par lesdits moyens de mesure (18), avec une plage de valeurs de consigne, et des moyens d'asservissement des moyens de modification de l'ambiance régnant dans l'enceinte (2).

## Patentansprüche

1. Verfahren zur Überwachung des Wassergehaltes von in einem geschlossenen Raum (2) gelagerten Produkten (10), **dadurch gekennzeichnet, dass** es folgende Schritte enthält:
- man misst an mindestens einem beliebigen Punkt im Inneren der Produktmasse einen repräsentativen Wert des Wasserdampf-Teildrucks in dem Punkt im Zustand des Gesamtgleichgewichts des Wasserdampf-Teildrucks der Produkte im geschlossenen Raum,
- man vergleicht den gemessenen Wert mit einem Bereich von Sollwerten, die repräsentativ für den Wasserdampfteildruck sind, und
- man verändert in geeigneter Weise die in dem geschlossenen Raum herrschende Umgebungsbedingung, wenn der gemessene Wert außerhalb des Bereichs liegt.

2. Verfahren nach Anspruch 1, **dadurch gekennzeichnet, dass** der Schritt des Veränderns der in dem geschlossenen Raum (2) herrschenden Umgebungsbedingung einen Schritt des Herausnehmens mindestens eines Teils der Produkte (10) aus dem geschlossenen Raum, einen Schritt der Behandlung der herausgenommenen Produkte, der sich außerhalb des geschlossenen Raums abspielt und einen Schritt des Wiedereinführens der behandelten Produkte in das Innere des geschlossenen Raums (2) umfasst.

3. Verfahren nach Anspruch 1, **dadurch gekennzeichnet, dass** der Schritt des Veränderns der in dem geschlossenen Raum (2) herrschenden Umgebungsbedingung insbesondere durch Ventilation realisiert wird, wobei die Produkte (10) im Inneren des geschlossenen Raums gehalten werden.

4. Verfahren nach einem der Ansprüche 1 bis 3, **dadurch gekennzeichnet, dass** man gleichzeitig mindestens zwei für den Wasserdampf-Teildruck repräsentative Werte an zwei voneinander entfernt liegenden Punkten der Produktmasse misst und die zwei gemessenen Werte miteinander vergleicht.

5. Verfahren nach einem der Ansprüche 1 bis 4, **dadurch gekennzeichnet, dass** man an ein und demselben Punkt im Inneren der Produktmasse mehrere für den Wasserdampf-Teildruck in diesem Punkt repräsentative Werte zeitlich gestaffelt misst.

6. Verfahren nach einem beliebige der vorhergehenden Ansprüche, **dadurch gekennzeichnet, dass** der für den Wasserdampf-Teildruck repräsentative Wert die Wasseraktivität ist.

7. Vorrichtung zur Überwachung des Wassergehaltes von in einem geschlossenen Raum (2) gelagerten Produkten für die Durchführung eines Verfahrens nach einem beliebigen der vorgehenden Ansprüche, umfassend Mittel zur Veränderung der in dem geschlossenen Raum herrschenden Umgebungsbedingung, insbesondere einen Ventilator (12), darüber hinaus Mittel (18) zur Messung eines für den Wasserdampf-Teildruck repräsentativen Werts im Gleichgewichtszustand der Produkte an mindestens einem beliebigen Punkt im Inneren der Produktmasse (10) umfassend.

8. Vorrichtung nach Anspruch 7, **dadurch gekennzeichnet, dass** die Messmittel mindestens einen Messaufnehmer (18) der Wasseraktivität im Inneren der Produktmasse (10 umfassen.

9. Vorrichtung nach Anspruch 8, **dadurch gekennzeichnet, dass** der Messaufnehmer (18) der Wasseraktivität einen Adsorptionsfilm (32) besitzt, der durch elektrische Erregungsmittel (24) aktiviert werden kann, wobei die Impedanz des Films mit der Menge an seiner Oberfläche und/oder innerhalb des Films adsorbierten Wassermolekülen.

10. Vorrichtung nach einem der Ansprüche 8 oder 9, **dadurch gekennzeichnet, dass** sie Mittel zum Vergleich eines von den Messmitteln (18) erhaltenen Wertes mit einem Bereich von Sollwerten und Mittel zum Regeln der Mittel zum Verändern der in dem geschlossenen Raum (2) herrschenden Umgebungsbedingung umfasst.

## Claims

1. Method for controlling the water content of products (10) stored in an enclosure (2), **characterised in that** it comprises the following steps:
- determination, at at least one arbitrary point within the mass of products, of a value representative of the water vapour partial pressure at the said point, in the state of global equilibrium of the water vapour partial pressure in the enclosure, of the said products,
- the said value determined is compared with a range of reference values representative of the water vapour partial pressure and
- the environment prevailing in the enclosure is modified in an appropriate manner if the said value determined is outside the said range.

2. Method according to Claim 1, **characterised in that** the step for modifying the environment prevailing in the enclosure (2) comprises a step for extraction of at least a portion of the products (10) from the enclosure, a step for treatment of the extracted products, which takes place outside the enclosure, and a step for reintroduction of the treated products into the interior of the enclosure (2).

3. Method according to Claim 1, **characterised in that** the step for modifying the environment prevailing in the enclosure (2) is carried out while keeping the products (10) inside the enclosure, in particular by ventilation of the enclosure.

4. Method according to one of Claims 1 to 3, **characterised in that** at least two values representative of the water vapour partial pressure are determined simultaneously at two points, some distance apart, in the mass of products and the said two values determined are compared.

5. Method according to one of Claims 1 to 4, **characterised in that** at a given point within the mass of products several values representative of the water vapour partial pressure at the said point are determined staggered over time.

6. Method according to any one of the preceding claims, **characterised in that** the value representative of the water vapour partial pressure is the activity of the water.

7. Device for controlling the water content of products stored in an enclosure (2), for carrying out the method according to any one of the preceding claims, comprising means for modifying the environment prevailing in the enclosure, in particular a fan (12), also comprising means for determining (18) a value representative of the water vapour partial pressure, in the state of equilibrium of the said products, at at least one arbitrary point within the mass of products (10).

8. Device according to Claim 7, **characterised in that** the determination means comprise at least one sensor (18) for the activity of the water within the mass of products (10).

9. Device according to Claim 8, **characterised in that** the said sensor (18) for the activity of the water has an adsorption membrane (32) capable of being activated by electrical excitation means (24), the impedance of the said membrane varying with the quantity of water molecules adsorbed at its surface and/or within the said membrane.

10. Device according to one of Claims 8 or 9, **characterised in that** it comprises means for comparison of a value obtained by the said determination means (18) with a range of reference values, and means for controlling the means for modification of the environment prevailing in the enclosure (2).
